# FASCICULE DE BREVET EUROPEEN

(11) **EP 2 764 481 B1**
(45) Date de publication et mention de la délivrance du brevet: **11.05.2016**
(21) Numéro de dépôt: 12775764.9
(22) Date de dépôt: 25.09.2012
(51) Int. Cl.: G06Q 20/20, G06Q 20/34, G06Q 20/32, G07F 7/10

(54) **PROCÉDÉ ET SYSTÈME POUR EXECUTER UNE TRANSACTION SANS CONTACT AUTORISANT DE MULTIPLES APPLICATIONS ET DE MULTIPLES INSTANCES D'UNE MÊME APPLICATION**
VERFAHREN UND SYSTEM ZUR AUSFÜHRUNG EINER KONTAKTLOSEN TRANSAKTION MIT MEHREREN ANWENDUNGEN UND MEHREREN INSTANZEN DERSELBEN ANWENDUNG
METHOD AND SYSTEM FOR EXECUTING A CONTACTLESS TRANSACTION ALLOWING MULTIPLE APPLICATIONS AND MULTIPLE INSTANCES OF THE SAME APPLICATION

(30) Priorité: 04.10.2011 FR 1158943
(43) Date de publication de la demande: 13.08.2014
(73) Titulaire: Inside Secure, 13590 Meyreuil (FR)
(72) Inventeur: ALIMI, Vincent, 14550 Blainville sur Orne (FR)
(74) Mandataire: de Roquemaurel, Bruno
(86) Numéro de dépôt international: PCT/FR2012/052128
(87) Numéro de publication internationale: WO 2013/050684

(56) Documents cités:
- FR-A1- 2 945 143
- US-B2- 7 631 810

## Description

La présente invention concerne les transactions à champ proche. Des techniques de communication sans contact par couplage inductif, également appelées techniques de communication RFID (Radio Frequency IDentification) ou à champ proche NFC ("Near Field Communication"), ont été développées pour réaliser des cartes de paiement sans contact. Une telle carte permet de conduire des transactions à champ proche avec un terminal de transaction comme par exemple un point de retrait d'argent, un point de vente de produits (distributeur de tickets, distributeur de produits consommables, terminal de paiement, ...), un terminal de contrôle d'accès payant avec débit automatique (borne d'accès au métro, borne de paiement d'autobus, etc.). A cet effet, la carte comprend un circuit intégré sans contact ("Contactless Integrated Circuit") équipé d'un processeur sécurisé et d'une bobine d'antenne connectée au circuit intégré. Le processeur sécurisé comprend une unité centrale de traitement, un système d'exploitation, un programme application carte ("Card Application") et/ou un programme application lecteur ("Reader Application"). Le terminal comprend lui-même une bobine d'antenne et est configuré pour conduire une transaction à champ proche avec une carte en émettant un champ magnétique. Le terminal peut se relier en temps réel ou en temps différé à un serveur de transaction, pour valider un paiement et/ou débiter un compte de l'utilisateur.

Il a également été proposé d'intégrer un processeur sécurisé et un contrôleur NFC dans des objets portables électroniques tels que les téléphones mobiles, pour conduire des transactions à champ proche au moyen de ces derniers. Un téléphone équipé d'une interface NFC comporte généralement un processeur principal, un circuit de radiocommunication, un processeur sécurisé de carte SIM ("Subscriber Identity Module"), un contrôleur NFC, une bobine d'antenne connectée au contrôleur NFC, et un processeur sécurisé configuré pour conduire des transactions NFC. Le processeur conduisant les transactions NFC comprend une unité centrale de traitement, un système d'exploitation, un programme application carte et/ou un programme application lecteur. En pratique, le processeur sécurisé conduisant les transactions NFC peut être réalisé sous la forme d'une carte à circuit intégré UICC ("Universal Integrated Circuit Card"), par exemple de type mini-SIM ou micro-SIM, qui peut se connecter aux circuits d'un téléphone mobile.

Le processeur sécurisé prévu pour conduire des transactions NFC, qu'il soit intégré dans une carte sans contact ou dans un objet portable, peut comporter plusieurs applications de paiement installées, et plusieurs instances installées d'une même application. La distinction entre les instances d'une même application est effectuée à l'aide d'identifiants d'application étendus comprenant une partie identifiant l'application et une extension permettant d'identifier une instance particulière de l'application.

Or certains terminaux sans contact gèrent les identifiants d'application, mais pas les identifiants d'application étendus. Il en résulte qu'un tel terminal ne peut pas s'adresser à une instance d'application en particulier installée dans un processeur sécurisé avec lequel il tente de conduire une transaction NFC. En pratique, ce sera toujours la même instance d'application qui sera activée dans le processeur sécurisé. L'utilisateur ne peut donc pas désigner une instance préférée d'application pour conduire certaines transactions.

Dans le document US 7 631 810, il a été proposé d'installer dans le processeur sécurisé une application de gestion d'instances d'application permettant à l'utilisateur du processeur de sélectionner une instance parmi plusieurs instances de la même application. Lorsque l'application correspondante doit être activée à la suite de l'établissement d'une communication sans contact avec un terminal de transaction sans contact, l'application de gestion d'instances active l'instance d'application sélectionnée par l'utilisateur. L'application de gestion d'instances se fait alors passer vis-à-vis du terminal pour l'application requise par le terminal. Cette activation d'instance d'application est effectuée soit en retransmettant à l'instance d'application la commande de sélection d'application reçue du terminal, soit en transmettant une commande interne de sélection à l'instance d'application par l'application de gestion d'instances. L'instance d'application activée peut répondre à la commande de sélection en fournissant l'identifiant de l'application de gestion d'instances pour que la réponse ne soit pas rejetée par le terminal.

Cette solution nécessite de modifier les applications existantes, notamment pour qu'elles puissent recevoir des commandes de l'application de gestion d'instances et répondre à ces commandes, et pour empêcher qu'elles puissent répondre directement à une commande émise par un terminal de transaction, sans passer par l'application de gestion d'instances. Il peut également être nécessaire de modifier les applications pour qu'elles répondent à une commande de sélection reçue d'un terminal en fournissant non pas leur identifiant, mais celui de l'application de gestion d'instances. Ces modifications impliquent de longues et coûteuses phases de développement et de certification, en particulier s'il s'agit d'applications faisant intervenir une transaction de paiement ou une procédure d'authentification.

Il est donc souhaitable de pouvoir conduire une transaction avec une instance d'application préalablement sélectionnée par l'utilisateur et activée simplement à l'aide d'un identifiant d'application ne permettant pas d'identifier une instance particulière de l'application, c'est-à-dire identifiant toutes les instances possibles de l'application. Il est également souhaitable d'offrir à l'utilisateur la possibilité de désigner une instance d'application à exécuter à la suite de l'établissement d'une communication avec un terminal de transaction, parmi plusieurs instances installées d'une même application.

Des modes de réalisation concernent un procédé d'exécution d'une transaction sans contact, comprenant des étapes consistant à : établir une communication sans contact entre un terminal de transaction sans contact et un processeur, transmettre une commande associée à un identifiant d'application du terminal au processeur. Selon un mode de réalisation, le procédé comprend des étapes exécutées par un système d'exploitation du processeur, consistant à : rechercher dans une table un identifiant d'instance correspondant à l'identifiant d'application figurant dans la commande, et associé à un indicateur d'état spécifiant qu'une instance d'application ayant l'identifiant d'instance est à un état activable, et activer l'instance d'application ayant l'identifiant d'instance trouvé dans la table, en lui transmettant la commande, l'instance d'application une fois activée exécutant une transaction sans contact avec le terminal de transaction.

Selon un mode de réalisation, l'identifiant d'une instance d'application est contenu dans l'identifiant d'application de l'application correspondante.

Selon un mode de réalisation, le processeur met en oeuvre un système d'exploitation conforme au standard GlobalPlatform.

Selon un mode de réalisation, le procédé comprend des étapes consistant à : transmettre une requête de sélection d'instance d'application, associée à un identifiant d'instance d'application, à une application de gestion d'instances d'application installée dans le processeur, lire la table pour y rechercher l'identifiant d'instance d'application figurant dans la requête, et mettre à jour la table pour mettre à l'état activable l'indicateur d'état associé dans la table à l'identifiant d'instance d'application figurant dans la requête, et pour mettre à un état non activable tous les indicateurs d'état situés dans la table, avant l'identifiant d'instance figurant dans la requête, et associés à un même identifiant d'application que l'identifiant d'instance d'application figurant dans la requête.

Selon un mode de réalisation, le procédé comprend des étapes de transmission d'une requête d'une liste d'instances d'application installées dans le processeur, la liste comprenant pour chaque instance d'application installée un identifiant d'instance d'application et la valeur de l'indicateur d'état associé dans la table à l'identifiant d'instance, et la présentation de la liste sur un écran d'affichage.

Selon un mode de réalisation, les applications comprennent des applications de paiement et chaque instance d'une application de paiement correspond à une carte de paiement.

Des modes de réalisation concernent également un système de transaction sans contact de type à champ proche, comprenant un terminal de transaction sans contact et un premier processeur pouvant être mis en communication avec le terminal de transaction, le système de transaction étant configuré pour mettre en oeuvre le procédé tel que précédemment défini.

Selon un mode de réalisation, le système comprend un circuit intégré sans contact couplé à une bobine d'antenne, le circuit intégré comprenant le premier processeur.

Selon un mode de réalisation, le système comprend un téléphone mobile comportant un processeur principal, un contrôleur NFC, et le premier processeur qui est connecté au processeur principal et au contrôleur NFC, le premier processeur comprenant un système d'exploitation configuré pour conduire des transactions à champ proche par l'intermédiaire du contrôleur NFC.

Des modes de réalisation concernent également un dispositif portable comportant des moyens de communication sans contact, pour établir une communication sans contact avec un terminal de transaction par l'intermédiaire des moyens de communication sans contact, le dispositif portable comprenant un premier processeur configuré pour : établir une communication sans contact avec un terminal de transaction sans contact, recevoir une commande associée à un identifiant d'application. Selon un mode de réalisation, le premier processeur comprend un système d'exploitation configuré pour : rechercher dans une table, un identifiant d'instance correspondant à l'identifiant d'application figurant dans la commande, et associé à un indicateur d'état spécifiant qu'une instance d'application ayant l'identifiant d'instance est à un état activable, et activer l'instance d'application ayant l'identifiant d'instance trouvée en lui transmettant la commande, l'instance d'application une fois activée exécutant une transaction avec le terminal de transaction.

Selon un mode de réalisation, le premier processeur est configuré pour : recevoir une requête de sélection d'instance d'application, associée à un identifiant d'instance d'application, et la transmettre à une application de gestion d'instances d'application, lire la table pour y rechercher l'identifiant d'instance d'application figurant dans la requête, et mettre à jour la table pour mettre à l'état activable l'indicateur d'état associé dans la table à l'identifiant d'instance d'application figurant dans la requête, et pour mettre à un état non activable tous les indicateurs d'état situés dans la table, avant l'identifiant d'instance figurant dans la requête, et associés à un même identifiant d'application que l'identifiant d'instance d'application figurant dans la requête.

Selon un mode de réalisation, le dispositif comprend un circuit intégré sans contact couplé à une bobine d'antenne, le circuit intégré comprenant le premier processeur.

Selon un mode de réalisation, le dispositif comprend un téléphone mobile comportant un processeur principal, un contrôleur NFC, et le premier processeur qui est connecté au processeur principal et au contrôleur NFC, le premier processeur étant configuré pour conduire des transactions à champ proche par l'intermédiaire du contrôleur.

Selon un mode de réalisation, le premier processeur met en oeuvre un système d'exploitation conforme au standard GlobalPlatform.

Des exemples de réalisation de l'invention seront décrits dans ce qui suit, à titre non limitatif en relation avec les figures jointes parmi lesquelles :
la figure 1 représente schématiquement un système de transaction sans contact comprenant une carte à puce sans contact,
la figure 2 représente schématiquement un système de transaction NFC comprenant un téléphone mobile équipé d'un contrôleur NFC,
la figure 3 représente schématiquement une architecture logicielle de la carte à puce de la figure 1 ou d'un processeur sécurisé du téléphone mobile de la figure 2, selon un mode de réalisation,
la figure 4 représente des étapes d'une transaction NFC exécutée par le système de transaction NFC de la figure 1 ou 2, selon un mode de réalisation,
la figure 5 représente des étapes d'une séquence de sélection par l'utilisateur d'une instance d'application, exécutée par le système de transaction NFC de la figure 1 ou 2, selon un mode de réalisation.

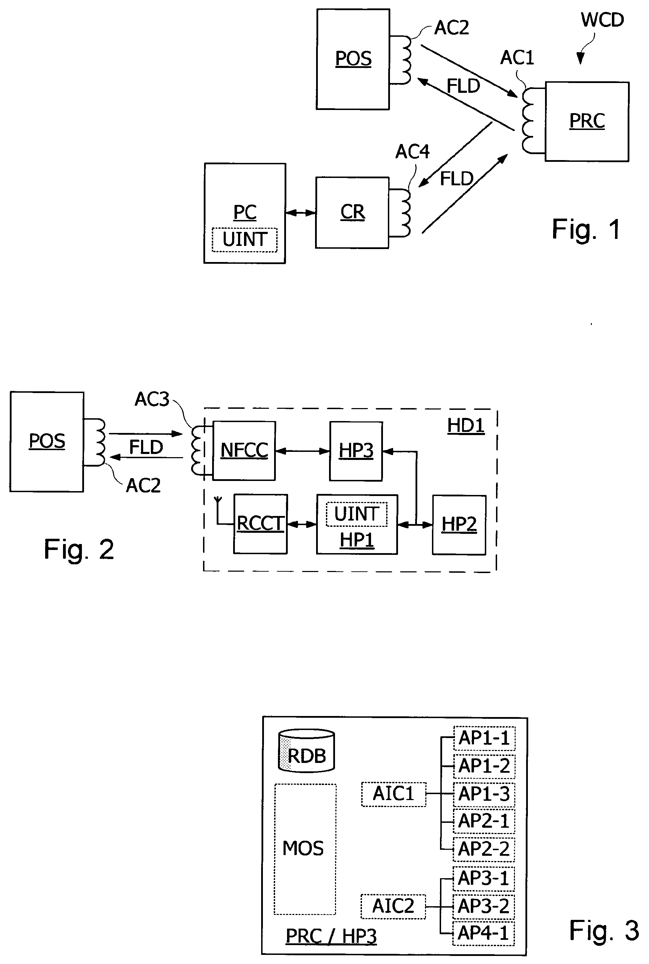

La figure 1 représente un système de transaction sans contact, selon un mode de réalisation. Le système comprend un circuit intégré sans contact WSD, par exemple logé dans une carte, et un terminal POS de transaction sans contact. Le terminal POS comprend une bobine d'antenne AC2, et est configuré pour conduire une transaction sans contact avec un circuit intégré sans contact, tel que le circuit WSD. Le circuit WSD comprend un processeur sécurisé PRC et une bobine d'antenne AC1 connectée au processeur. Une transaction comprend l'échange d'unités de données de protocole d'application APDU ("Application Protocol Data Unit") appelées "données d'application". Les données d'application comprennent des commandes envoyées par le terminal POS et des réponses envoyées par le circuit intégré WSD. Le terminal POS peut se relier en temps réel ou en temps différé à un serveur de transaction (non représenté), pour valider un paiement et/ou débiter un compte de l'utilisateur.

La figure 2 représente un système de transaction comprenant un téléphone mobile HD1 et le terminal de transaction POS. Le téléphone HD1 comporte un processeur principal HP1, un circuit de radiocommunication RCCT, un processeur sécurisé HP2 de carte SIM ("Subscriber Identity Module"), un contrôleur NFC désigné "NFCC", une bobine d'antenne AC3 reliée au contrôleur NFCC, et un processeur sécurisé HP3 configuré pour conduire des transactions NFC par l'intermédiaire du contrôleur NFCC. Le processeur HP1 est connecté aux processeurs HP2 et HP3, ainsi qu'au contrôleur NFCC. Le processeur HP3 est relié au contrôleur NFCC par un bus, par exemple de type SWP ("Single Wire Protocol"). En pratique, le processeur HP3 peut prendre la forme d'une carte à circuit intégré UICC ("Universal Integrated Circuit Card"), par exemple de type mini-SIM ou micro-SIM.

Un exemple d'architecture logicielle du processeur PRC ou HP3 est représenté sur la figure 3. Le processeur PRC ou HP3 comprend un système d'exploitation MOS ("Operating System") et plusieurs instances d'applications installées. Dans l'exemple de la figure 3, les instances d'applications installées dans le processeur PRC, HP3 comprennent des instances AP1-1, AP1-2, AP1-3 d'une application AP1, des instances AP2-1, AP2-2 d'une application AP2, des instances AP3-1, AP3-2 d'une application AP3 et une instance AP4-1 d'une application AP4. Les applications sont par exemple des applications de paiement, et les instances d'application correspondent chacune à une carte de paiement émise par exemple par un organisme bancaire. Chaque application est repérée par un identifiant d'application unique et chaque instance d'application est repérée par un identifiant d'instance d'application dit "identifiant d'application étendu" comprenant l'identifiant de l'application correspondante, associé à un identifiant complémentaire d'instance permettant de distinguer entre elles les instances de l'application. Les identifiants d'application et d'instance d'application peuvent être tels que spécifiés par la norme ISO 7816. A titre d'exemple, l'application AP1 a pour identifiant :
AABBCCDDEEFF10,
et les instances AP1-1, AP1-2, AP1-3, les identifiants :
AA BB CC DD EE FF 10 01,
AABBCCDDEEFF10 02,
AABBCCDDEEFF10 03.

Lors de l'exécution d'une instance d'application, le processeur HP3 émule une carte sans contact et utilise le contrôleur NFCC en mode passif pour conduire une transaction avec un terminal de transaction POS qui émet le champ magnétique FLD. Le terminal POS envoie au contrôleur NFCC des commandes que ce dernier retransmet au processeur HP3. Le processeur HP3 émet des réponses qui sont transmises au contrôleur NFCC, puis au terminal POS par le contrôleur NFCC, par l'intermédiaire d'un canal radiofréquence RF.

Selon un mode de réalisation, le processeur PRC, HP3 comprend une ou plusieurs applications spécifiques AIC1, AIC2 de gestion d'instances d'application. Dans l'exemple de la figure 3, l'application AIC1 assure la gestion des instances des applications AP1 et AP2, et l'application AIC2 assure la gestion des instances des applications AP3 et AP4. Chacune des applications AIC1 et AIC2 est configurée pour permettre à l'utilisateur de sélectionner une seule instance par application. Bien entendu, chacune des applications AIC1, AIC2 peut assurer la gestion de toutes les applications installées.

Certains terminaux de transaction sont configurés pour n'envoyer qu'un identifiant d'application lors de l'initiation d'une transaction, c'est-à-dire sans extension spécifiant une instance particulière de l'application. Lorsque le processeur PRC, HP3 reçoit un identifiant d'application pour lancer l'exécution d'une des applications AP1-AP4, le système d'exploitation MOS du processeur PRC, HP3 est configuré pour exécuter une instance préalablement sélectionnée de l'application correspondant à l'identifiant reçu.

Le système d'exploitation MOS du processeur PRC, HP3 peut assurer la gestion d'une table ou base de registre RDB mémorisant pour chaque instance d'application installée dans le processeur PRC, HP3, notamment un identifiant de l'instance d'application, associé à un indicateur d'état. L'indicateur d'état associé à chaque instance d'application installée peut prendre notamment la valeur activable ("SELECTABLE") ou la valeur non activable ou verrouillé ("LOCKED"). Les applications de gestion d'instance AIC1, AIC2 sont configurées pour changer cet indicateur d'état sur requête d'un utilisateur. Selon un mode de réalisation, lorsque l'utilisateur demande la sélection d'une instance d'application, l'instance sélectionnée est mise à l'état activable et toutes les autres instances de l'application sont mises à l'état verrouillé. Lorsque le processeur PRC, HP3 reçoit d'un terminal POS une requête d'activation d'une application, associée à un identifiant d'application et non d'instance d'application, le système d'exploitation MOS active l'instance d'application figurant à l'état activable dans la table RDB.

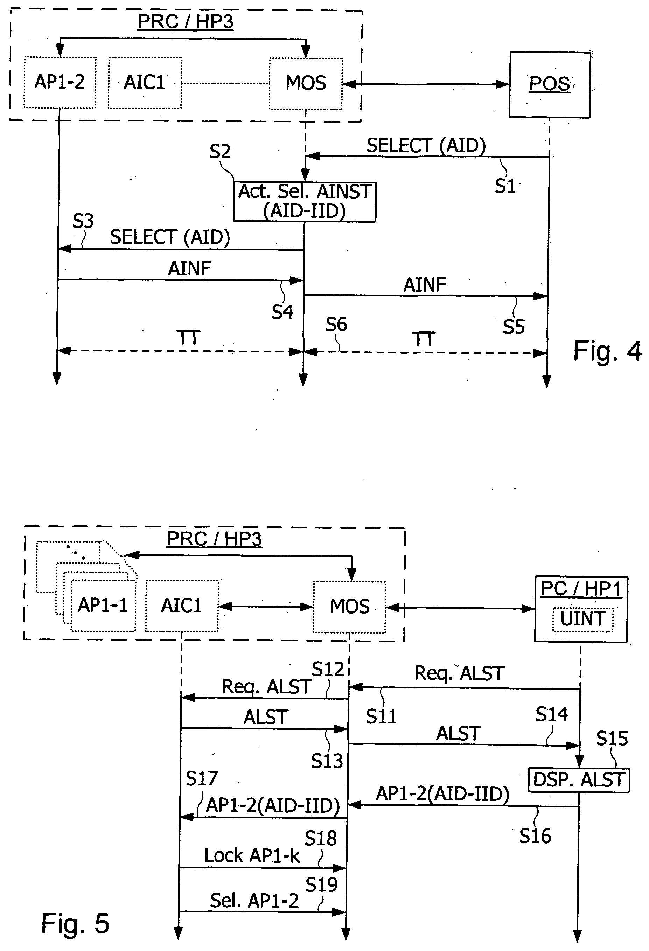

La figure 4 représente une séquence d'étapes d'activation d'une instance d'application, selon un mode de réalisation. Cette séquence d'étapes comprend des étapes S1 à S6 exécutées une fois que le terminal POS et le processeur PRC, HP3 ont initié une transaction en établissant entre eux une communication sans contact. A l'étape S1, le terminal POS transmet une commande SELECT de sélection d'application à exécuter, associée à un identifiant d'application AID n'identifiant pas une instance particulière de l'application. A l'étape S2, le processeur PRC, HP3 (système d'exploitation MOS) reçoit la commande SELECT. Le système d'exploitation MOS détecte que l'identifiant AID reçu ne comporte pas d'identifiant d'une instance d'application. Le système d'exploitation MOS accède donc à la table RDB pour y rechercher une instance à l'état activable de l'application correspondant à l'identifiant AID reçu, et récupère l'identifiant étendu AID-IID de l'instance trouvée dans la table. Si plusieurs instances d'une même application sont à l'état activable dans la table RDB, l'instance d'application trouvée à l'étape S2 peut être la première de la table correspondant à l'identifiant d'application AID de la commande SELECT reçue, si la table est lue séquentiellement par le système d'exploitation MOS. Il en résulte que si la table RDB mentionne deux instances d'une même application à l'état activable, l'instance d'application figurant dans la table RDB en seconde position ne sera jamais activée.

A l'étape S3, le système d'exploitation MOS active l'instance d'application à l'état activable trouvée dans la table RDB (instance AP1-2 dans l'exemple de la figure 4), et transmet à l'instance d'application activée la commande SELECT. A l'étape S4, l'instance d'application AP1-2 correspondant à l'identifiant complet AID-IID répond à la commande SELECT en transmettant des informations relatives à l'instance d'application comme son nom, et son identifiant AID éventuellement complété de son extension d'identification d'instance IID. A l'étape S5, la réponse de l'instance d'application AP1-2 est transmise par le système d'exploitation MOS au terminal POS. A l'étape S6, une transaction TT telle qu'une transaction de paiement classique peut ensuite se dérouler entre l'instance d'application AP1-2 et le terminal POS.

De cette manière, les commandes sans identifiant d'instance d'application peuvent être acheminées par le système d'exploitation du processeur PRC, HP3, vers une instance choisie par l'utilisateur, sans avoir à modifier les applications, et sans requérir l'intervention d'une application de gestion durant l'acheminement de la commande. L'intervention d'une telle application de gestion peut être seulement requise pour permettre à l'utilisateur d'indiquer des choix d'instances d'application à activer lors de transactions.

Bien entendu, si la commande SELECT contient un identifiant d'instance, le système d'exploitation MOS peut activer l'instance d'application désignée sans consulter la table RDB, et lui transmet la commande. Le système d'exploitation peut aussi consulter la table RDB et refuser l'activation de l'instance d'application désignée si cette dernière est à l'état verrouillé.

La figure 5 représente une séquence d'étapes prévue pour permettre à l'utilisateur de modifier l'état activable/verrouillé d'instances d'application installées dans le processeur PRC, HP3, selon un mode de réalisation. Dans le cas du processeur PRC, l'utilisateur peut accéder à cette séquence d'étapes à l'aide d'un terminal, par exemple un ordinateur PC connecté à un lecteur de carte CR (figure 1), le lecteur CR comportant une bobine d'antenne AC4 pour établir une communication sans contact avec le circuit WSD. Dans le cas du processeur HP3, l'utilisateur peut accéder à cette séquence d'étapes à l'aide du processeur principal HP1 du téléphone en utilisant le clavier et l'écran d'affichage du téléphone. La séquence d'étapes comprend des étapes S11 à S19. Les étapes S11 et S14 à S16 sont exécutées par une application de gestion UINT installée dans le processeur principal HP1 du téléphone HD1 ou dans l'ordinateur PC. Certaines des étapes S11 à S19 sont exécutées par l'une des applications de gestion d'instances d'application AIC1, AIC2 (AIC1 dans l'exemple de la figure 5).

A l'étape S11, l'application UINT transmet au processeur PRC, HP3 une requête de liste des instances d'application installées ALST. A l'étape S12, cette requête est transmise par le système d'exploitation MOS à l'application AIC1. Cette requête peut être transmise à la suite d'une commande SELECT classique associée à l'identifiant de l'application AIC1 demandée. Cette requête peut comporter une liste d'identifiants d'applications à gérer. A l'étape S13, l'application AIC1 répond à la requête en transmettant une liste d'instances d'application ALST. La liste ALST peut contenir toutes les instances d'application installées dans le processeur PRC, HP3 ou seulement les instances des applications mentionnées dans requête. La liste ALST est transmise à l'étape S14 par le système d'exploitation MOS à l'application UINT.

A l'étape S15, l'application UINT affiche la liste reçue ALST sur l'écran d'affichage de l'ordinateur PC ou du téléphone mobile HD1. La liste ALST transmise et affichée peut comprendre les identifiants étendus AID-IID des instances d'application installées, chaque identifiant étendu étant éventuellement associé à un nom ou libellé de l'application et/ou de l'instance d'application, ainsi qu'à l'état activable / verrouillé de l'instance d'application. L'utilisateur peut ainsi visualiser les instances d'applications installées dans le processeur PRC, HP3, et celles qui sont activables lors d'une transaction. Sur la liste affichée, l'utilisateur peut désigner une instance d'application à rendre activable.

A l'étape S16 exécutée lorsque l'utilisateur a désigné une instance d'application, l'application UINT transmet au processeur PRC, HP3 une requête de sélection d'une instance d'application contenant l'identifiant complet AID-IID de l'instance d'application désignée par l'utilisateur. Dans l'exemple de la figure 5, l'instance d'application AP1-2 a été sélectionnée par l'utilisateur. A l'étape S17, la requête de sélection est transmise à l'application AIC1. A l'étape S18, l'application AIC1 accède à la table RDB pour placer à l'état verrouillé l'indicateur d'état associé à chacune des instances AP1-k de l'application AP1 correspondant à l'instance d'application AP1-2 sélectionnée. A l'étape S19, l'application AIC1 accède à la table RDB pour placer à l'état activable l'indicateur d'état associé à l'instance d'application AP1-2 sélectionnée.

Bien entendu, si la table RDB est lue séquentiellement par le système d'exploitation MOS lors de la recherche d'une instance d'application à l'état activable (étape S2) pour traiter une commande SELECT, il n'est pas nécessaire de modifier l'indicateur d'état des instances de la même application figurant dans la table après l'instance d'application à mettre à l'état activable.

Par ailleurs, les étapes S11 à S15 peuvent ne pas être nécessaires, la mise à l'état activable d'une instance d'une application et à l'état verrouillé des instances de la même application figurant dans la table RDB, pouvant être effectuées systématiquement lors de l'installation d'une nouvelle instance d'application dans le processeur PRC, HP3. Ainsi, si l'utilisateur souhaite rendre activable une instance d'application, il peut le faire en commandant l'installation ou la réinstallation de l'instance d'application dans le processeur PRC, HP3.

Le système d'exploitation MOS mis en oeuvre par le processeur PRC, HP3 peut satisfaire aux spécifications du standard GlobalPlatform, version 2.2 ou ultérieure (accessibles à l'adresse http://www.globalplatform.org). Le standard GlobalPlatform (notamment version 2.2) prévoit une table dans laquelle chaque instance d'application installée est associée à un identifiant complet de l'instance, et notamment à un indicateur d'état de cycle de vie pouvant prendre les états "SELECTABLE" ou "LOCKED". Cette table est complétée à chaque nouvelle installation d'une instance d'application. Le standard GlobalPlatform 2.2 prévoit également qu'une commande SELECT associée à un identifiant d'application (sans extension à un identifiant d'instance d'application) soit exécutée par le système d'exploitation en consultant la table pour rechercher une instance (la première de la table) à l'état SELECTABLE de l'application correspondant à l'identifiant d'application de la commande SELECT. Le standard GlobalPlatform spécifie que l'accès à cette table est protégé et peut être autorisé par une attribution de privilèges "Global Registry" et "Global Lock". Les applications AIC1, AIC2 peuvent ainsi recevoir les privilèges "Global Registry" et "Global Lock" pour disposer de droits leur permettant d'accéder à la table RDB relative aux instances d'application installées, et de modifier les indicateurs d'état d'autres applications.

Il apparaîtra clairement à l'homme de l'art que la présente invention est susceptible de diverses variantes de réalisation et diverses applications. En particulier, l'invention n'est pas limitée à un processeur dont le système d'exploitation est conforme au standard GlobalPlatform, mais peut être mise en oeuvre par tout processeur permettant de conduire des transactions sans contact avec un terminal de transaction sans contact, et prévoyant la mise en oeuvre d'une table de gestion d'activation d'instances d'application.

L'invention ne s'applique pas nécessairement à des transactions sécurisées, mais à n'importe quelle transaction à champ proche. Le processeur PRC, HP3 n'est donc pas nécessairement sécurisé. L'invention peut s'appliquer également à des transactions d'accès à des transports en commun, ainsi qu'à des transactions de fidélisation attribuant notamment des points de fidélité à l'utilisateur ou permettant à l'utilisateur d'utiliser des points de fidélité qu'il a accumulés.

Par ailleurs, tout autre mode d'identification des applications et des instances d'application peut être envisagé. Ainsi, il n'est pas nécessaire que l'identifiant d'une instance d'application commence par l'identifiant de l'application correspondante, ni même que l'identifiant d'une instance d'application contienne l'identifiant de l'application. Dans ce dernier cas, la table RDB peut mémoriser l'identifiant de chaque instance d'application installée dans le processeur PRC, HP3, et en association avec chaque identifiant d'instance d'application, l'identifiant de l'application correspondante, et l'indicateur d'état de l'instance d'application.

## Revendications

1. Procédé d'exécution d'une transaction sans contact, comprenant des étapes consistant à :
établir une communication sans contact entre un terminal de transaction sans contact (POS) et un processeur (PRC, HP3),
transmettre une commande associée à un identifiant d'application (AID) du terminal au processeur,
**caractérisé en ce qu'**il comprend des étapes exécutées par un système d'exploitation du processeur, consistant à :
rechercher dans une table (RDB) un identifiant d'instance (AID-IID) correspondant à l'identifiant d'application (AID) figurant dans la commande, et associé à un indicateur d'état spécifiant qu'une instance d'application ayant l'identifiant d'instance est à un état activable, et
activer l'instance d'application ayant l'identifiant d'instance trouvé dans la table, en lui transmettant la commande, l'instance d'application une fois activée exécutant une transaction sans contact avec le terminal de transaction.

2. Procédé selon la revendication 1, dans lequel l'identifiant d'une instance d'application (AIC) est contenu dans l'identifiant d'application (AIC-IID) de l'application correspondante.

3. Procédé selon la revendication 2, dans lequel le processeur (PRC, HP3) met en oeuvre un système d'exploitation (MOS) conforme au standard GlobalPlatform.

4. Procédé selon l'une des revendications 1 à 3, comprenant des étapes consistant à :
transmettre une requête de sélection d'instance d'application, associée à un identifiant d'instance d'application, à une application de gestion d'instances d'application installée dans le processeur (PRC, HP3),
lire la table (RDB) pour y rechercher l'identifiant d'instance d'application figurant dans la requête, et
mettre à jour la table pour mettre à l'état activable l'indicateur d'état associé dans la table à l'identifiant d'instance d'application figurant dans la requête, et pour mettre à un état non activable tous les indicateurs d'état situés dans la table, avant l'identifiant d'instance figurant dans la requête, et associés à un même identifiant d'application que l'identifiant d'instance d'application figurant dans la requête.

5. Procédé selon la revendication 4, comprenant des étapes de transmission d'une requête d'une liste d'instances d'application installées dans le processeur (PRC, HP3), la liste comprenant pour chaque instance d'application installée un identifiant d'instance d'application et la valeur de l'indicateur d'état associé dans la table (RDB) à l'identifiant d'instance, et la présentation de la liste sur un écran d'affichage.

6. Procédé selon l'une des revendications 1 à 5, dans lequel les applications comprennent des applications de paiement et chaque instance d'une application de paiement correspond à une carte de paiement.

7. Système de transaction sans contact de type à champ proche, comprenant un terminal de transaction sans contact et un premier processeur (PRC, HP3) pouvant être mis en communication avec le terminal de transaction (POS),
**caractérisé en ce qu'**il est configuré pour mettre en oeuvre le procédé selon l'une des revendications 1 à 6.

8. Système selon la revendication 7, comprenant un circuit intégré sans contact (WSD) couplé à une bobine d'antenne (AC1), le circuit intégré comprenant le premier processeur (PRC).

9. Système selon la revendication 7, comprenant un téléphone mobile (HD1) comportant un processeur principal (HP1), un contrôleur NFC (NFCC), et le premier processeur (HP3) qui est connecté au processeur principal (HP1) et au contrôleur NFC, le premier processeur comprenant un système d'exploitation (MOS) configuré pour conduire des transactions à champ proche par l'intermédiaire du contrôleur NFC.

10. Dispositif portable comportant des moyens de communication sans contact (NFCC, AC1, AC3), pour établir une communication sans contact avec un terminal de transaction (POS) par l'intermédiaire des moyens de communication sans contact, le dispositif portable comprenant un premier processeur (PRC, HP3) configuré pour :
établir une communication sans contact avec un terminal de transaction sans contact (POS),
recevoir une commande associée à un identifiant d'application (AID),
**caractérisé en ce que** le premier processeur comprend un système d'exploitation configuré pour :
rechercher dans une table (RDB), un identifiant d'instance (AID-IID) correspondant à l'identifiant d'application (AID) figurant dans la commande, et associé à un indicateur d'état spécifiant qu'une instance d'application ayant l'identifiant d'instance est à un état activable, et
activer l'instance d'application ayant l'identifiant d'instance trouvée en lui transmettant la commande, l'instance d'application une fois activée exécutant une transaction avec le terminal de transaction.

11. Dispositif selon la revendication 10, dans lequel le premier processeur (PRC, HP3) est configuré pour :
recevoir une requête de sélection d'instance d'application, associée à un identifiant d'instance d'application, et la transmettre à une application de gestion d'instances d'application,
lire la table (RDB) pour y rechercher l'identifiant d'instance d'application figurant dans la requête, et
mettre à jour la table pour mettre à l'état activable l'indicateur d'état associé dans la table à l'identifiant d'instance d'application figurant dans la requête, et pour mettre à un état non activable tous les indicateurs d'état situés dans la table, avant l'identifiant d'instance figurant dans la requête, et associés à un même identifiant d'application que l'identifiant d'instance d'application figurant dans la requête.

12. Dispositif selon la revendication 10 ou 11, comprenant un circuit intégré sans contact (WSD) couplé à une bobine d'antenne (AC1), le circuit intégré comprenant le premier processeur (PRC).

13. Dispositif selon la revendication 10 ou 11, comprenant un téléphone mobile (HD1) comportant un processeur principal (HP1), un contrôleur NFC (NFCC), et le premier processeur (HP3) qui est connecté au processeur principal (HP1) et au contrôleur NFC, le premier processeur étant configuré pour conduire des transactions à champ proche par l'intermédiaire du contrôleur.

14. Dispositif selon l'une des revendications 10 à 13, dans lequel le premier processeur (PRC, HP3) met en oeuvre un système d'exploitation (MOS) conforme au standard GlobalPlatform.

## Patentansprüche

1. Verfahren zur Durchführung einer kontaktlosen Transaktion, umfassend Schritte, die darin bestehen:
eine kontaktlose Kommunikation zwischen einem kontaktlosen Transaktionsendgerät (POS) und einem Prozessor (PRC, HP3) aufzubauen,
vom Endgerät auf den Prozessor einen mit einer Anwendungskennung (AID) assoziierten Befehl zu übertragen,
**dadurch gekennzeichnet, dass** es von einem Betriebssystem des Prozessors durchgeführte Schritte umfasst, die darin bestehen:
in einer Tabelle (RDB) eine Instanzkennung (AID-IID) zu suchen, die der im Befehl vorliegenden Anwendungskennung (AID) entspricht, und die mit einer Zustandsanzeige assoziiert ist, die spezifiziert, dass eine die Instanzkennung aufweisende Anwendungsinstanz in einem aktivierbaren Zustand ist, und
die die in der Tabelle gefundene Instanzkennung aufweisende Anwendungsinstanz zu aktivieren, indem ihr der Befehl übertragen wird, wobei die Anwendungsinstanz, nachdem sie aktiviert worden ist, eine kontaktlose Transaktion mit dem Transaktionsendgerät durchführt.

2. Verfahren nach Anspruch 1, bei dem die Kennung einer Anwendungsinstanz (AIC) in der Anwendungskennung (AIC-IID) der entsprechenden Anwendung enthalten ist.

3. Verfahren nach Anspruch 2, bei dem der Prozessor (PRC, HP3) ein Betriebssystem (MOS) implementiert, das mit dem GlobalPlatform-Standard konform ist.

4. Verfahren nach einem der Ansprüche 1 bis 3, umfassend Schritte, die darin bestehen:
auf eine im Prozessor (PRC, HP3) installierte Anwendungsinstanzverwaltungsanwendung eine mit einer Anwendungsinstanzkennung assoziierte Anwendungsinstanzauswahlabfrage zu übertragen,
die Tabelle (RDB) zu lesen, um darin die in der Abfrage vorliegende Anwendungsinstanzkennung zu suchen, und
die Tabelle zu aktualisieren, um die in der Tabelle mit der in der Abfrage vorliegenden Anwendungsinstanzkennung assoziierte Zustandsanzeige in den aktivierbaren Zustand zu bringen, und um alle Zustandsanzeigen, die sich in der Tabelle vor der in der Abfrage vorliegenden Instanzkennung befinden und die mit einer selben Anwendungskennung wie der in der Abfrage vorliegenden Anwendungsinstanzkennung assoziiert sind, in einen nicht aktivierbaren Zustand zu bringen.

5. Verfahren nach Anspruch 4, umfassend Schritte der Übertragung einer Abfrage nach einer Liste von im Prozessor (PRC, HP3) installierten Anwendungsinstanzen, wobei die Liste für jede installierte Anwendungsinstanz eine Anwendungsinstanzkennung und den Wert der in der Tabelle (RDB) mit der Instanzkennung assoziierten Zustandsanzeige umfasst, und der Darstellung der Liste auf einem Anzeigebildschirm.

6. Verfahren nach einem der Ansprüche 1 bis 5, bei dem die Anwendungen Zahlungsanwendungen umfassen und jede Instanz einer Zahlungsanwendung einer Zahlungskarte entspricht.

7. System zur kontaktlosen Transaktion vom Typ Nahfeld, umfassend ein kontaktloses Transaktionsendgerät und einen ersten Prozessor (PRC, HP3), der in Kommunikation mit dem Transaktionsendgerät (POS) gesetzt werden kann,
**dadurch gekennzeichnet, dass** es konfiguriert ist, um das Verfahren nach einem der Ansprüche 1 bis 6 durchzuführen.

8. System nach Anspruch 7, umfassend eine kontaktlose integrierte Schaltung (WSD), die mit einer Antennenspule (AC1) gekoppelt ist, wobei die integrierte Schaltung den ersten Prozessor (PRC) umfasst.

9. System nach Anspruch 7, umfassend ein Mobiltelefon (HD1), das einen Hauptprozessor (HP1), einen NFC-Kontroller (NFCC), und den ersten mit dem Hauptprozessor (HP1) und dem NFC-Kontroller verbundenen Prozessor (HP3) aufweist, wobei der erste Prozessor ein Betriebssystem (MOS) umfasst, das konfiguriert ist, um Nahfeldtransaktionen durch den NFC-Kontroller durchzuführen.

10. Tragbare Vorrichtung umfassend Mittel zur kontaktlosen Kommunikation (NFCC, AC1, AC3), um durch die Mittel zur kontaktlosen Kommunikation eine kontaktlose Kommunikation mit einem Transaktionsendgerät (POS) aufzubauen, wobei die tragbare Vorrichtung einen ersten Prozessor (PRC, HP3) umfasst, der konfiguriert ist, um:
eine kontaktlose Kommunikation mit einem kontaktlosen Transaktionsendgerät (POS) aufzubauen,
einen mit einer Anwendungskennung (AID) assoziierten Befehl zu empfangen,
**dadurch gekennzeichnet, dass** der erste Prozessor ein Betriebssystem umfasst, das konfiguriert ist, um:
in einer Tabelle (RDB) eine Instanzkennung (AID-IID) zu suchen, die der im Befehl vorliegenden Anwendungskennung (AID) entspricht und die mit einer Zustandsanzeige assoziiert ist, die spezifiziert, dass eine die Instanzkennung aufweisende Anwendungsinstanz in einem aktivierbaren Zustand ist, und
die die gefundene Instanzkennung aufweisende Anwendungsinstanz zu aktivieren, indem ihr der Befehl übertragen wird, wobei die Anwendungsinstanz, nachdem sie aktiviert worden ist, eine Transaktion mit dem Transaktionsendgerät durchführt.

11. Vorrichtung nach Anspruch 10, bei der der erste Prozessor (PRC, HP3) konfiguriert ist, um:
eine mit einer Anwendungsinstanzkennung assoziierte Anwendungsinstanzauswahlabfrage zu empfangen, und sie auf eine Anwendungsinstanzverwaltungsanwendung zu übertragen,
die Tabelle (RDB) zu lesen, um darin die in der Abfrage vorliegende Anwendungsinstanzkennung zu suchen, und
die Tabelle zu aktualisieren, um die in der Tabelle mit der in der Abfrage vorliegenden Anwendungsinstanzkennung assoziierte Zustandsanzeige in den aktivierbaren Zustand zu bringen, und um alle Zustandsanzeigen, die sich in der Tabelle vor der in der Abfrage vorliegenden Instanzkennung befinden und die mit einer gleichen Anwendungskennung wie der in der Abfrage vorliegenden Anwendungsinstanzkennung assoziiert sind, in einen nicht aktivierbaren Zustand zu bringen.

12. Vorrichtung nach Anspruch 10 oder 11, umfassend eine mit einer Antennenspule (AC1) gekoppelte kontaktlose integrierte Schaltung (WSD), wobei die integrierte Schaltung den ersten Prozessor (PRC) umfasst.

13. Vorrichtung nach Anspruch 10 oder 11, umfassend ein Mobiltelefon (HD1), das einen Hauptprozessor (HP1), einen NFC-Kontroller (NFCC), und den mit dem Hauptprozessor (HP1) und dem NFC-Kontroller verbundenen ersten Prozessor (HP3) aufweist, wobei der erste Prozessor konfiguriert ist, um Nahfeld-Transaktionen durch den Kontroller durchzuführen.

14. Vorrichtung nach einem der Ansprüche 10 bis 13, bei der der erste Prozessor (PRC, HP3) ein Betriebssystem (MOS) implementiert, das mit dem GlobalPlatform-Standard konform ist.

## Claims

1. A method for executing a contactless transaction, comprising:
establishing a contactless communication between a contactless transaction terminal (POS) and a processor (PRC, HP3),
transmitting a command associated with an application identifier (AID) from the terminal to the processor, and
comprising the following steps executed by an operating system of the processor:
searching in a table (RDB) for an instance identifier (AID-IID) corresponding to the application identifier (AID) appearing in the command, and associated with a state indicator specifying that an application instance having the instance identifier is in an activable state, and
activating the application instance having the instance identifier found in the table, by transmitting the command thereto, the application instance once activated executing a contactless transaction with the transaction terminal.

2. The method of claim 1, wherein the identifier of an application instance (AIC) is contained in the application identifier (AIC-IID) of the corresponding application.

3. The method of claim 2, wherein the processor (PRC, HP3) implements an operating system (MOS) complying with the GlobalPlatform standard.

4. The method of one of claims 1 to 3, comprising:
transmitting an application instance selection request, associated with an application instance identifier, to an application instance management application installed in the processor (PRC, HP3),
reading the table (RDB) to search for the application instance identifier appearing in the request, and
updating the table to place in the activable state the state indicator associated in the table with the application instance identifier appearing in the request, and placing in a non activable state all the state indicators located in the table, before the instance identifier appearing in the request, and associated with a same application identifier as the application instance identifier appearing in the request.

5. The method of claim 4, comprising transmitting a request of a list of application instances installed in the processor (PRC, HP3), the list comprising for each installed application instance an application instance identifier and the value of the state indicator associated in the table (RDB) with the instance identifier, and displaying the list on a display screen.

6. The method of one of claims 1 to 5, wherein the applications comprise payment applications and each instance of a payment application corresponds to a payment card.

7. A contactless transaction system of near field type, comprising a contactless transaction terminal and a first processor (PRC, HP3) which may be put in communication with the transaction terminal (POS), the system being configured to implement the method of one of claims 1 to 6.

8. The system of claim 7, comprising a contactless integrated circuit (WSD) coupled to an antenna coil (AC1), the integrated circuit comprising the first processor (PRC).

9. The system of claim 7, comprising a mobile phone (HD1) comprising a main processor (HP1), a NFC controller (NFCC), and the first processor (HP3) which is connected to the main processor (HP1) and the NFC controller, the first processor comprising an operating system (MOS) configured to perform near field transactions through the NFC controller.

10. A portable device comprising contactless communication means (NFCC, AC1, AC3), to establish a contactless communication with a transaction terminal (POS) through contactless communication means, the portable device comprising a first processor (PRC, HP3) configured to:
establish a contactless communication with a contactless transaction terminal (POS), and
receive a command associated with an application identifier (AID),
the first processor comprising an operating system configured to:
search in a table (RDB), for an instance identifier (AID-IID) corresponding to the application identifier (AID) appearing in the command, and associated with a state indicator specifying that an application instance having the instance identifier is in an activable state, and
activate the application instance having the instance identifier found by transmitting the command thereto, the application instance once activated executing a transaction with the transaction terminal.

11. The device of claim 10, wherein the first processor (PRC, HP3) is configured to:
receive an application instance selection request, associated with an application instance identifier, and transmit it to an application instance management application,
read the table (RDB) to search for the application instance identifier appearing in the request, and
update the table to place in the activable state the state indicator associated in the table with the application instance identifier appearing in the request, and placing in a non activable state all the state indicators located in the table, before the instance identifier appearing in the request, and associated with a same application identifier as the application instance identifier appearing in the request.

12. The device of claim 10 or 11, comprising a contactless integrated circuit (WSD) coupled to an antenna coil (AC1), the integrated circuit comprising the first processor (PRC).

13. The device of claim 10 or 11, comprising a mobile phone (HD1) comprising a main processor (HP1), a NFC controller (NFCC), and the first processor (HP3) which is connected to the main processor (HP1) and the NFC controller, the first processor being configured to perform near field transactions through the controller.

14. The device of one of claims 10 to 13, wherein the first processor (PRC, HP3) implements an operating system (MOS) complying with the GlobalPlatform standard.
